Europäisches Patentamt

European Patent Office

Office européen des brevets

(19)

(11) Veröffentlichungsnummer : **0 141 108**
**B1**

(12) **EUROPÄISCHE PATENTSCHRIFT**

(45) Veröffentlichungstag der Patentschrift :
05.04.89

(21) Anmeldenummer : 84109993.0

(22) Anmeldetag : 22.08.84

(51) Int. Cl.⁴ : **C 08 L 27/06** // (C08L27/06, 23:16),(C08L27/06, 25:10),(C08L27/06, 53:02)

(54) **Kunststoffolie auf der Basis von Polyvinylchlorid-Homopolymerisaten und/oder Copolymerisaten.**

(30) Priorität : **30.08.83 DE 3331220**

(43) Veröffentlichungstag der Anmeldung :
**15.05.85 Patentblatt 85/20**

(45) Bekanntmachung des Hinweises auf die Patenterteilung : **05.04.89 Patentblatt 89/14**

(84) Benannte Vertragsstaaten :
**FR GB IT NL SE**

(56) Entgegenhaltungen :
**DE--U-- 8 220 682**
**US--A-- 3 005 796**
**US--A-- 4 199 490**
**KIRK OTHMER vol. 1, page 442**
**Die Akte enthält technische Angaben, die nach dem Eingang der Anmeldung eingereicht wurden und die nicht in dieser Patentschrift enthalten sind.**

(73) Patentinhaber : **J. H. Benecke AG**
**Beneckeallee 40**
**D-3000 Hannover 1 (DE)**

(72) Erfinder : **Wildenau, Artur, Dr.**
**Isernhagener Strasse 28**
**D-3004 Isernhagen 1 (DE)**

(74) Vertreter : **Leine, Sigurd, Dipl.-Ing. et al**
**LEINE & KÖNIG Patentanwälte Burckhardtstrasse 1**
**D-3000 Hannover 1 (DE)**

**Beschreibung**

Die Erfindung betrifft eine Kunststoffolie der im Oberbegriff des Patentanspruchs 1 genannten Art.

Aus der US-A-3 005 796 ist es bekannt, schlagzähfeste Folien aus Polyvinylchlorid herzustellen, dem kautschukartige Copolymere aus Butadien und Styrol sowie ein äußerer Weißmacher in Form von Weißöl zugeben werden. Die Flüchtigkeit und Wanderungseigenschaft dieses Weichmachers verschlechtern die Eigenschaften der Folie und führen insbesondere zur Verschlechterung des Tieftemperaturverhaltens, der Alterungsbeständigkeit und der Elastizität.

Die DE-GMS-8 220 682 betrifft tiefziehfähige Folienbahnen für Kraftfahrzeuginnenräume, die aus Gemischen von Acrylnitril-Butadien-Styrol-Copolymerisaten mit Polyvinylchlorid und Plastifizierungsmitteln hergestellt werden. Es hat sich gezeigt, daß solche Acrylnitril-Butadien-Styrol-Copolymerisate enthaltende Folien keine ausreichende Alterungsbeständigkeit aufweisen.

Der Erfindung liegt die Aufgabe zugrunde, eine Kunststoffolie der betreffenden Art zu schaffen, deren Eigenschaften hinsichtlich Festigkeit, Kautschukartigkeit, Tieftemperatureigenschaften und Alterungsbeständigkeit verbessert sind.

Die der Erfindung zugrundeliegende Aufgabe wird durch die im Kennzeichen des Patentanspruchs 1 angegebene Lehre gelöst.

Nach dieser Lehre weist die Kunststoffolie Anteile an Ethylenvinylacetat oder olefinischem Terpolymerisat als Plastifizierungsmittel und thermoplastischen Kautschuk auf. Die Gewichtsanteile des Kautschuks betragen dabei vorzugsweise 1 bis 10 Gew.%, vorzugsweise 3 Gew.%.

Der Einsatz des thermoplastischen Kautschuks macht die Verwendung äußerer Weichmacher entbehrlich, die wegen ihrer Flüchtigkeit oder Wanderungseigenschaften zu einer Verschlechterung der Eigenschaften des Kunststoffes führen, nämlich Verschlechterung des Tieftemperaturverhaltens, der Alterungsbeständigkeit und der Elastizität.

Als thermoplastischer Kautschuk kann aber auch Styrol-Butadien-Kautschuk oder Styrol-Kautschuk-Styrol-Block-Polymerisat-Typ verwendet werden. Der Kautschuk weist doppelbindungsfreie Kautschukblöcke auf. Dabei handelt es sich z. B. um ein Styrol-Ethylen-Butylen-Styrol-Block-Polymerisat.

Außerdem können in üblicher Weise Antioxidantien und Stabilisatoren einen Anteil der Gesamtrezeptur bilden.

## Beispiel 1 (Referenz Beispiel)

Ausgangsmischung gemäß Oberbegriff des Anspruchs 1 :

| | |
|---|---|
| Polyvinylchlorid-Homopolymerisat | 77,6 Gew.% |
| Ethylenvinylacetat-Kohlenmonoxid-Terpolymerisat | 19,4 Gew.% |
| Verarbeitungshilfsmittel | 3,0 Gew.% |

Aus dieser Mischung wurde bei 110° während 10 Minuten eine Dryblend-Mischung hergestellt. Dieser Mischung wurden kalt 3,0 Gew.% Ethylen-Propylen-Terpolymer-Kautschuk zugemischt. Daraus wurden bei 165 °C bei einer Verarbeitungszeit von 7 Minuten auf einem Walzwerk Walzfelle hergestellt, und die mechanischen Werte Reißkraft (N), Reißdehnung (mm) und Reißdehnung (%) wurden nach DIN 52911 gemessen, und zwar 4 und 24 Stunden nach der Herstellung. Es wurden folgende Werte gemessen :

| | Messung nach 4 Std. | Messung nach 24 Std. |
|---|---|---|
| Reißkraft (N) | 350 | 346 |
| Reißdehnung (mm) | 130 | 134 |
| Reißdehnung (%) | 220 | 235 |

## Beispiel 2 (Referenz Beispiel)

Es wurde von einer Mischung wie bei Beispiel 1 ausgegangen, jedoch wurde statt des Ethylen-Propylen-Terpolymer-Kautschuks gemäß Anspruch 3 Styrol-Butadien-Kautschuk mit 3 Gew.% gemäß Anspruch 4 zugemischt. Dabei ergaben sich folgende mechanische Werte :

| | Messung nach 4 Std. | Messung nach 24 Std. |
|---|---|---|
| Reißkraft (N) | 320 | 320 |
| Reißdehnung (mm) | 120 | 120 |
| Reißdehnung (%) | 200 | 196 |

## Beispiel 3

Es wurde von einer Grundmischung gemäß den Beispielen 1 und 2 ausgegangen, jedoch wurde

2

Styrol-Kautschuk-Styrol-Block-Polymerisat mit 3 Gew.% zugemischt. Dabei ergaben sich folgende Werkstoffwerte :

|  | Messung nach 4 Std. | Messung nach 24 Std. |
|---|---|---|
| Reißkraft (N) | 390 | 354 |
| Reißdehnung (mm) | 136 | 135 |
| Reißdehnung (%) | 240 | 239 |

**Patentansprüche**

1. Kunststoffolie auf der Basis von Polyvinylchlorid-Homopolymerisaten und/oder Copolymerisaten, die unter Verwendung von olefinisch ungesättigten Monomeren hergestellt sind, mit Anteilen an Ethylen-Vinylacetat oder olefinischem Terpolymerisat als Plastifizierungsmittel und mit thermoplastischem Kautschuk, dadurch gekennzeichnet, daß ein acrylnitril-freier und doppelbindungsfreier thermoplastischer Kautschuk verwendet wird.

2. Kunststoffolie nach Anspruch 1, dadurch gekennzeichnet, daß der Anteil an thermoplastischem Kautschuk 1 bis 10 Gew.%, vorzugsweise 3 Gew.%, beträgt.

3. Kunststoffolie nach Anspruch 1, dadurch gekennzeichnet, daß der thermoplastische Kautschuk Ethylen-Propylen-Terpolymer-Kautschuk ist, vorzugsweise aus Lösung gefällt.

4. Kunststoffolie nach Anspruch 1, dadurch gekennzeichnet, daß der Kautschuk Styrol-Butadien-Kautschuk ist.

5. Kunststoffolie nach Anspruch 1, dadurch gekennzeichnet, daß der Kautschuk vom Styrol-Kautschuk-Styrol-Block-Polymerisat-Typ ist.

6. Kunststoffolie nach Anspruch 5, dadurch gekennzeichnet, daß der Kautschuk doppelbindungsfreie Kautschukblöcke aufweist.

7. Kunststoffolie nach Anspruch 6, dadurch gekennzeichnet, daß der Kautschuk ein Styrol-Ethylen-Butylen-Styrol-Block-Polymerisat ist.

8. Kunststoffolie nach Anspruch 1, gekennzeichnet durch Verarbeitungshilfsmittel, insbesondere Antioxidantien und Stabilisatoren.

**Claims**

1. Synthetic plastics foil, based on polyvinyl chloride homopolymers and/or copolymers, which are produced with use of olefinically unsaturated monomers, with amounts of ethylenevinyl acetate or olefinic terpolymer as plasticiser and with thermoplastic rubber, characterised in that a thermoplastic rubber free from acrylonitrile and double bonds is used.

2. Synthetic plastics foil according to claim 1, characterised in that the proportion of thermoplastic rubber is 1 to 10 % by weight, advantageously 3 % by weight.

3. Synthetic plastics foil according to claim 1, characterised in that the thermoplastic rubber is ethylenepropylene-terpolymer rubber, advantageously precipitated from solution.

4. Synthetic plastics foil according to claim 1, characterised in that the rubber is styrene-butadiene rubber.

5. Synthetic plastics foil according to claim 1, characterised in that the rubber is of the styrene-rubber-styrene block polymer type.

6. Synthetic plastics foil according to claim 5, characterised in that the rubber comprises rubber blocks which are free from double bonds.

7. Synthetic plastics foil according to claim 6, characterised in that the rubber is a styrene-ethylenebutylene-styrene block polymer.

8. Synthetic plastics foil according to claim 1, charactecised by auxiliary processing media, more especially antioxidants and stabilisers.

**Revendications**

1. Feuille de matière synthétique à base d'homopolymères et/ou copolymères de chlorure de vinyle qui sont fabriqués en utilisant des monomères insaturés oléfiniquement, avec des portions d'acétate de vinyléthylène ou d'un terpolymère oléfinique en tant qu'agent plastifiant et avec un caoutchouc thermoplastique, caractérisée en ce qu'on utilise un caoutchouc thermoplastique à liaison acrylonitrile libre et à double liaison libre.

2. Feuille de matière synthétique selon la revendication 1, caractérisée en ce que la proportion de caoutchouc thermoplastique est de 1 à 10 % en poids, de préférence de 3 % en poids.

3. Feuille de matière thermoplastique selon la revendication 1, caractérisée en ce que le caoutchouc thermoplastique est un caoutchouc terpolymère éthylène-propylène, de préférence précipité à partir d'une solution.

4. Feuille de matière thermoplastique selon la revendication 1, caractérisée en ce que le caoutchouc est un caoutchouc styrène-butadiène.

5. Feuille de matière thermoplastique selon la revendication 1, caractérisée en ce que le caoutchouc est du type polymère caoutchouc styrène-styrène bloqué.

6. Feuille de matière synthétique selon la revendication 5, caractérisée en ce que le caoutchouc présente des blocs caoutchouc à double liaison libre.

7. Feuille de matière synthétique selon la revendication 6, caractérisée en ce que le caoutchouc est un polymère éthylène-butylène-styrène bloqué.

8. Feuille de matière synthétique selon la revendication 1, caractérisée par un agent auxiliaire de traitement, en particulier des antioxydants et des stabilisants.